# EUROPÄISCHE PATENTSCHRIFT

(11) **EP 4 139 645 B1**
(45) Veröffentlichungstag und Bekanntmachung des Hinweises auf die Patenterteilung: **17.04.2024**
(21) Anmeldenummer: 21742407.6
(22) Anmeldetag: 13.07.2021
(51) Int. Cl.: G01L 5/1627, G01L 3/14

(54) **DREHMOMENTSENSOR MIT RADIALELASTISCHEM MATERIALABSCHNITT**
TORQUE SENSOR HAVING A RADIALLY ELASTIC MATERIAL SECTION
CAPTEUR DE COUPLE AVEC SECTION EN MATÉRIAU RADIALEMENT ÉLASTIQUE

(30) Priorität: 16.07.2020 DE 102020004286
(43) Veröffentlichungstag der Anmeldung: 01.03.2023
(73) Patentinhaber: Sensodrive GmbH, 82234 Weßling (DE)
(72) Erfinder: GRANDL, Michael, 81245 München (DE); RUST, Christian, 82131 Gauting (DE); SATTLER, Mathias, 82319 Starnberg (DE)
(74) Vertreter: Beyer, Andreas
(86) Internationale Anmeldenummer: PCT/EP2021/069453
(87) Internationale Veröffentlichungsnummer: WO 2022/013214

(56) Entgegenhaltungen:
- US-B1- 6 324 919

## Beschreibung

Die Erfindung betrifft einen Drehmomentsensor mit einem sich axial und in Umfangsrichtung erstreckenden Grundkörper, der sich in einer radialen Richtung des Grundkörpers von einem ringförmigen Innenflansch mit ersten Krafteinleitungsstellen über einen mechanisch geschwächten Sensorabschnitt, der mit Messwertaufnehmern zur Erzeugung von Ausgangssignalen versehen ist, zu einem ringförmigen Außenflansch mit zweiten Krafteinleitungsstellen erstreckt, wobei die zweiten Krafteinleitungsstellen über einen radialelastischen Materialabschnitt mit dem Sensorabschnitt verbunden sind.

Ein solcher Drehmomentsensor ist aus der WO 2018/041948 bekannt. Mit diesem bekannten Drehmomentsensor kann eine weitgehende Entkopplung in radialer Richtung erreicht werden. Anders ausgedrückt kann verhindert werden, dass auf den Drehmomentsensor wirkende, radial gerichtete Kräfte zu Messfehlern führen. Solche radial gerichteten Kräfte können beispielsweise aus auf Fertigungstoleranzen beruhenden Rundheitsabweichungen an den zweiten Krafteinleitungsstellen resultieren. Die Folge solcher Rundheitsabweichungen kann ein Übersprechen der Messwertaufnehmer sein. Um Messfehler zu vermeiden, die durch radial wirkende Kräfte hervorgerufen werden können, ist bei dem bekannten Drehmomentsensor der radialelastische Materialabschnitt als ein dünnwandiger, in Axialrichtung des Grundkörpers verlaufender Materialabschnitt ausgebildet. Aufgrund der Dünnwandigkeit hat dieser radialelastische Materialabschnitt eine bezüglich radialer Verformungen niedrige Steifigkeit, ist jedoch in Bezug auf Torsionskräfte quasi-starr, d. h. hat gegenüber Torsionskräften eine hohe Steifigkeit. Der sich in Axialrichtung erstreckende, dünnwandige Materialabschnitt des bekannten Drehmomentsensors führt jedoch zu einer vergrößerten axialen Abmessung des gesamten Drehmomentsensors.

Aus der US 6,324,919 B1 ist ein mehraxialer Radlastsensor bekannt, der auf ein drehbares Bauteil wirkende Kräfte und/oder Momente messen kann. Hierzu sind in einem scheibenförmigen Körper des Sensors mehrere Öffnungen mit einem Boden vorhanden, der in radialer Richtung verläuft und auf den Messwertaufnehmer aufgeklebt werden. Radial auf den Körper des Sensors wirkende Kräfte werden über die mit den Messwertaufnehmern versehenen, radial verlaufenden Böden weitergeleitet.

Der Erfindung liegt die Aufgabe zugrunde, einen Drehmomentsensor bereitzustellen, der die Unempfindlichkeit des bekannten Drehmomentsensors gegenüber mechanischen Störeinflüssen, insbesondere dessen Unempfindlichkeit gegenüber radial wirkenden Kräften, beibehält und es darüber hinaus ermöglicht, eine kompaktere Bauform zu realisieren.

Diese Aufgabe ist ausgehend von einem zuvor beschriebenen, gattungsgemäßen Drehmomentsensor dadurch gelöst, dass der radialelastische Materialabschnitt durch mehrere radialelastische Biegebalken gebildet ist, die über einen Umfang des Grundkörpers verteilt angeordnet sind, und dass der radialelastische Materialabschnitt über einen ringförmigen, radial steifen Entkopplungsbereich mit dem mechanisch geschwächten Sensorabschnitt verbunden ist, wie in Anspruch 1 definiert ist.

Die radialelastischen Biegebalken können ohne weiteres so ausgeführt werden, dass sie in axialer Richtung weniger oder jedenfalls nicht mehr Bauraum benötigen als die übrigen Bereiche bzw. Abschnitte des Grundkörpers. Beispielsweise können die Biegebalken durch eine Reihe von Schlitzen gebildet sein, die den radialelastischen Materialabschnitt in axialer oder radialer Richtung durchsetzen. Vorzugsweise erstrecken sich die Schlitze zumindest im Wesentlichen in Umfangsrichtung, jedoch sind auch Ausführungsformen möglich, bei denen die Schlitze einen linearen oder linear abknickenden Verlauf haben. Der Begriff "Schlitz" bedeutet im Rahmen der vorliegenden Offenbarung insbesondere, dass die Breite einer durch den Schlitz gebildeten Öffnung sehr viel geringer ist als deren Längserstreckung.

Die Anzahl der radialelastischen Biegebalken kann relativ frei gewählt werden. Um über den gesamten Umfang gesehen eine gute Entkopplung gegenüber radial wirkenden Kräften zu erreichen, sind vorzugsweise wenigstens drei Biegebalken über den Umfang des Grundkörpers verteilt angeordnet. Besonders bevorzugt werden aber mehr als drei radialelastische Biegebalken vorgesehen, beispielsweise vier, fünf, sechs, sieben oder acht radialelastische Biegebalken. Es ist ohne weiteres möglich, auch noch deutlich mehr radialelastische Biegebalken vorzusehen, beispielsweise sechszehn radialelastische Biegebalken. Die Anzahl der tatsächlich verwendeten radialelastischen Biegebalken kann von der Bauform und Größe des Grundkörpers und insbesondere von dem auf dem Grundkörper zur Verfügung stehenden Platz abhängen. Grundsätzlich lässt sich durch eine größere Anzahl radialelastischer Biegebalken eine Vergleichmäßigung der Entkopplung gegenüber radial wirkenden Kräften erreichen, es reichen jedoch für eine gute Entkopplung gegenüber radial wirkenden Kräften schon drei oder vier radialelastische Biegebalken aus.

Durch das Vorsehen des ringförmigen, radial steifen Entkopplungsbereichs zwischen dem geschwächten Sensorbereich und dem radialelastischen Materialabschnitt wird verhindert, dass von dem radialelastischen Materialabschnitt aufgenommene Kräfte Auswirkungen auf den geschwächten Sensorbereich haben. Mit anderen Worten sorgt der ringförmige, radial steife Entkopplungsbereich dafür, dass der geschwächte Sensorbereich nichts oder nahezu nichts davon mitbekommt, was im radialelastischen Materialbereich passiert.

Insgesamt ermöglicht es die Verwendung der radialelastischen Biegebalken bei der Ausbildung des radialelastischen Materialabschnitts in Kombination mit dem ringförmigen, radial steifen Entkopplungsbereich, dass die zweiten Krafteinleitungsstellen, der radialelastische Materialabschnitt, der ringförmige Entkopplungsbereich, der geschwächte Sensorabschnitt und die ersten Krafteinleitungsstellen eine gemeinsame radiale Querschnittsebene aufweisen können. Bei einer solchen Ausgestaltung folgen von radial innen gesehen die ersten Krafteinleitungsstellen, der Sensorabschnitt, der ringförmige Entkopplungsbereich, der radialelastische Materialabschnitt und die zweiten Krafteinleitungsstellen radial aufeinander. Neben ihrer Erstreckung in radialer Richtung weisen sowohl der Sensorabschnitt als auch der radialelastische Materialabschnitt und der ringförmige Entkopplungsbereich sowie die ersten und zweiten Krafteinleitungsstellen eine Erstreckung in axialer Richtung auf, die schon aus Stabilitätsgründen erforderlich ist. Die ersten und zweiten Krafteinleitungsstellen, der ringförmige Entkopplungsbereich, der radialelastische Materialabschnitt und der Sensorabschnitt können insgesamt in ein und derselben radialen Querschnittsebene angeordnet sein (wobei die Dicke dieser Querschnittsebene dann der Axialerstreckung der ersten und zweiten Krafteinleitungsstellen, des ringförmigen Entkopplungsbereichs, des radialelastischen Materialabschnitts und des Sensorabschnitts entspricht), es kann jedoch auch Niveauunterschiede zwischen den einzelnen Bereichen bzw. Abschnitten geben. Beispielsweise kann aus Stabilitätsgründen die Axialerstreckung der zweiten Krafteinleitungsstellen größer sein als die Axialerstreckung des radialelastischen Materialabschnitts und/oder des Sensorabschnitts. Eine solche gemeinsame radiale Querschnittsebene kommt einer geringen Abmessung des Drehmomentsensors in axialer Richtung zugute.

Bei bevorzugten Ausführungsformen des erfindungsgemäßen Drehmomentsensors weist der radialelastische Materialabschnitt eine Reihe sich zumindest im Wesentlichen in Umfangsrichtung erstreckender Schlitze auf, die den radialelastischen Materialabschnitt in axialer Richtung durchsetzen, d. h. in Axialrichtung vollständig durch den radialelastischen Materialabschnitt hindurch verlaufen. Diese sich zumindest im Wesentlichen in Umfangsrichtung erstreckenden Schlitze verlaufen immer nur über einen Teil der Umfangserstreckung des radialelastischen Materialabschnitts, so dass in radialer Richtung gesehen Materialbrücken bestehen bleiben, die den mechanischen Zusammenhalt des Drehmomentsensors gewährleisten. Die einzelnen, sich zumindest im Wesentlichen in Umfangsrichtung erstreckenden Schlitze können unterschiedliche radiale Abstände von einem Mittelpunkt des Grundkörpers des Drehmomentsensors haben.

Die Erstreckung jedes Schlitzes in Umfangsrichtung kann dabei beispielsweise in einem Bereich von 25 bis 70° liegen und beträgt bei bevorzugten Ausführungsbeispielen zwischen etwa 35 und etwa 55°. Die Umfangserstreckung jedes Schlitzes kann gleichgroß sein, es ist aber ebenso möglich, im radialelastischen Materialabschnitt Schlitze mit unterschiedlich großen Umfangserstreckungen zu kombinieren. Beispielsweise kann durch geeignet angeordnete Schlitze mit unterschiedlich großen Umfangserstreckungen die radiale Nachgiebigkeit des radialelastischen Materialabschnitts in bestimmten radialen Richtungen vergrößert bzw. verkleinert werden, falls dies gewünscht sein sollte. Dabei gilt grundsätzlich, dass ein Schlitz mit einer größeren Umfangserstreckung zu einer höheren radialen Nachgiebigkeit in dem Bereich führt, in dem ein solcher Schlitz angeordnet ist.

In einer Ausführungsform sind die sich zumindest im Wesentlichen in Umfangsrichtung erstreckenden Schlitze jeweils kreis(ring)segmentförmig. Die kreissegmentförmigen Schlitze können unabhängig von der Größe ihrer Umfangserstreckung auch in mehreren Gruppen angeordnet sein. In einer Ausführungsform des erfindungsgemäßen Drehmomentsensors sind die jeweils kreisringsegmentförmigen Schlitze in zumindest zwei Gruppen angeordnet, wobei jede Gruppe einen anderen radialen Abstand von einem Mittelpunkt des Grundkörpers hat. Die Umfangserstreckung der kreisringsegmentförmigen Schlitze kann dabei gleich oder auch unterschiedlich sein.

Gemäß einer Weiterbildung der vorgenannten Ausführungsformen sind die kreisringsegmentförmigen Schlitze einer Gruppe zu den kreisringsegmentförmigen Schlitzen einer anderen Gruppe in Umfangsrichtung versetzt angeordnet. Gemäß einer Weiterbildung einer solchen Ausführungsform sind die kreisringsegmentförmigen Schlitze aller Gruppen in Umfangsrichtung versetzt zueinander angeordnet. Ein Versatz der kreisringsegmentförmigen Schlitze in Umfangsrichtung gegenüber anderen kreisringsegmentförmigen Schlitzen, die in dem radialelastischen Materialabschnitt vorhanden sind, erleichtert die Ausbildung eines Drehmomentsensors, dessen radialelastischer Materialabschnitt in Umfangsrichtung gesehen überall eine zumindest im Wesentlichen gleiche radiale Nachgiebigkeit aufweist.

Bei einer anderen bevorzugten Ausführungsform des erfindungsgemäßen Drehmomentsensors weisen die sich zumindest im Wesentlichen in Umfangsrichtung erstreckenden Schlitze Umfangsabschnitte auf, deren radialer Abstand von einem Mittelpunkt des Grundkörpers sich von einem radialen Abstand unterscheidet, den andere Umfangsabschnitte der sich zumindest im Wesentlichen in Umfangsrichtung erstreckenden Schlitze vom Mittelpunkt des Grundkörpers haben. Insbesondere kann dabei ein und derselbe Schlitz Umfangsabschnitte aufweisen, deren radialer Abstand vom Mittelpunkt des Grundkörpers jeweils unterschiedlich ist. Durch geeignete Wahl der Erstreckung, den einzelne Umfangsabschnitte in Umfangsrichtung haben, und geeignete Wahl des radialen Abstands vom Mittelpunkt des Grundkörpers können radiale Nachgiebigkeiten des radialelastischen Materialabschnitts maßgeschneidert und insbesondere vergleichmäßigt werden.

Gemäß einer noch anderen bevorzugten Ausführungsform des erfindungsgemäßen Drehmomentsensors ändert sich ein radialer Abstand, den die sich zumindest im Wesentlichen in Umfangsrichtung erstreckenden Schlitze von einem Mittelpunkt des Grundkörpers haben, über den Verlauf eines Schlitzes kontinuierlich. Bei einer solchen Ausführungsform kann der Verlauf der Schlitze beispielsweise der Anordnung von Turbinenschaufeln eines Turbinenrades ähneln.

Unabhängig von der genauen Form der Schlitze überlappen sich bei bevorzugten Ausführungsformen des erfindungsgemäßen Drehmomentsensors zumindest einige der Schlitze in Umfangsrichtung. Eine solche Überlappung von Schlitzen in Umfangsrichtung ermöglicht auf konstruktiv einfache Weise die Realisierung radialelastischer Biegebalken.

Es versteht sich, dass viele der zuvor genannten Ausgestaltungen miteinander kombiniert werden können. So ist beispielsweise die Anordnung der Schlitze in Gruppen nicht von einer kreisringsegmentförmigen Gestalt der Schlitze abhängig. Auch können sich Schlitze unabhängig von ihrer Form und unabhängig davon, ob sie in Gruppen angeordnet sind oder nicht, in Umfangsrichtung überlappen. Weitere Kombinationen der zuvor erläuterten Ausgestaltungen sind möglich, sofern sie sich nicht ersichtlich widersprechen.

Unabhängig von den zuvor beschriebenen Ausführungsformen ist der Grundkörper eines erfindungsgemäßen Drehmomentsensors vorzugsweise kreisscheibenförmig. Abweichungen von der Kreisscheibenform können durch bestimmte Einbausituationen bedingt sein.

Ferner ist der Grundkörper eines erfindungsgemäßen Drehmomentsensors, unabhängig davon, ob der Grundkörper kreisscheibenförmig ist oder nicht, vorzugsweise monolithisch, d. h. einstückig. Die Schlitze im radialelastischen Materialabschnitt können beispielsweise durch Wasserstrahlschneiden oder Laserschneiden erzeugt sein.

Als Messwertaufnehmer kommen bei bevorzugten Ausgestaltungen erfindungsgemä-ßer Drehmomentsensoren Dehnmessstreifen zum Einsatz. Alternativ oder auch zusätzlich können Messwertaufnehmer mit beispielsweise Faser-Bragg-Gitter oder Piezoelementen verwendet werden.

Mehrere Ausführungsbeispiele eines erfindungsgemäßen Drehmomentsensors werden im Folgenden anhand der beigefügten, schematischen Zeichnungen näher erläutert. Es zeigt:
- Figur 1: eine Draufsicht auf eine erste Ausführungsform eines erfindungsgemäßen Drehmomentsensors,
- Figur 2: den Schnitt II-II aus Figur 1,
- Figur 3: die erste Ausführungsform in einer räumlichen Darstellung von schräg oben,
- Figur 4: die Darstellung aus Figur 3 in aufgeschnittener Form,
- Figur 5: eine Draufsicht auf eine zweite Ausführungsform eines erfindungsgemäßen Drehmomentsensors,
- Figur 6: den Schnitt VI-VI aus Figur 5,
- Figur 7: eine räumliche Darstellung der zweiten Ausführungsform von schräg oben,
- Figur 8: die Darstellung auf Figur 7 in aufgeschnittener Form,
- Figur 9: eine Draufsicht auf eine dritte Ausführungsform eines erfindungsgemäßen Drehmomentsensors,
- Figur 10: den Schnitt X-X aus Figur 9,
- Figur 11: eine räumliche Darstellung der dritten Ausführungsform von schräg oben,
- Figur 12: die Darstellung aus Figur 11 in aufgeschnittener Form,
- Figur 13: eine Draufsicht auf eine vierte Ausführungsform eines erfindungsgemäßen Drehmomentsensors,
- Figur 14: den Schnitt XIV-XIV aus Figur 13,
- Figur 15: eine räumliche Darstellung der vierten Ausführungsform von schräg oben,
- Figur 16: die Darstellung aus Figur 15 in aufgeschnittener Form,
- Figur 17: eine Draufsicht auf eine fünfte Ausführungsform eines erfindungsgemäßen Drehmomentsensors,
- Figur 18: den Schnitt XVIII-XVIII aus Figur 17,
- Figur 19: eine räumliche Darstellung der fünften Ausführungsform von schräg oben,
- Figur 20: die Darstellung aus Figur 19 in aufgeschnittener Form,
- Figur 21: eine Draufsicht auf eine sechste Ausführungsform eines erfindungsgemäßen Drehmomentsensors,
- Figur 22: den Schnitt XXII-XXII aus Figur 21,
- Figur 23: eine räumliche Darstellung der sechsten Ausführungsform von schräg oben,
- Figur 24: die Darstellung aus Figur 23 in aufgeschnittener Form,
- Figur 25: eine Draufsicht auf eine siebte Ausführungsform eines erfindungsgemäßen Drehmomentsensors,
- Figur 26: den Schnitt XXVI-XXVI aus Figur 25,
- Figur 27: eine räumliche Darstellung der siebten Ausführungsform von schräg oben, und
- Figur 28: die Darstellung aus Figur 27 in aufgeschnittener Form.

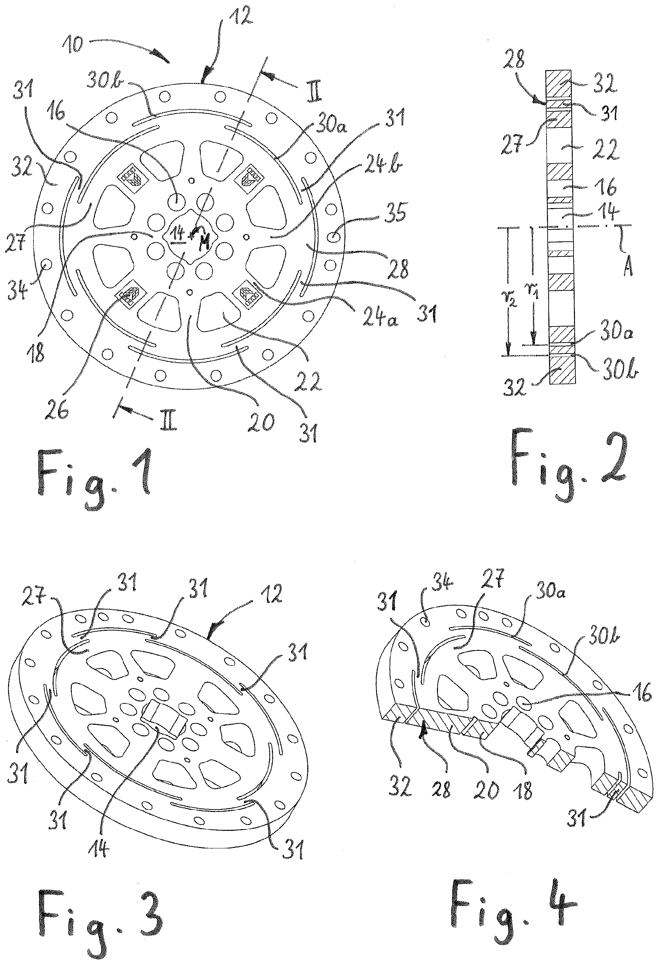

Die Figuren 1 bis 4 zeigen eine erste Ausführungsform eines erfindungsgemäßen Drehmomentsensors 10 in verschiedenen Ansichten. Der Drehmomentsensor 10 hat einen hier kreisscheibenförmigen Grundkörper 12 mit einer Mittellängsachse A (siehe Fig.2) und einem hier virtuellen Mittelpunkt M (siehe Fig. 1). Im Zentrum des Grundkörpers 12 befindet sich eine Öffnung 14, die zum Anbringen des Drehmomentsensors 10 an beispielsweise einer Achse oder Welle (nicht gezeigt) dienen kann.

Kreisförmig um die zentrale Öffnung 14 des Grundkörpers 12 herum sind mehrere erste Krafteinleitungsstellen 16 (hier acht erste Krafteinleitungsstellen) angeordnet, die zusammen einen ringförmigen Innenflansch 18 bilden. Jede erste Krafteinleitungsstelle 16 ist in den gezeigten Ausführungsbeispielen eine Bohrung, die axial durch den Grundkörper 12 hindurch verläuft. Radial außerhalb des ringförmigen Innenflansches 18 befindet sich ein ebenfalls ringförmiger, mechanisch geschwächter Sensorabschnitt 20. Die mechanische Schwächung dieses Abschnitts 20 wird durch eine Reihe ringförmig angeordneter Ausnehmungen 22 im Grundkörper 12 erreicht, von denen jede in den hier dargestellten Ausführungsformen die Gestalt eines Tortenstücksegments hat. Die Ausnehmungen 22 mit abgerundet ausgeführten Ecken durchsetzen den Grundkörper 12 in axialer Richtung vollständig. Zwischen den Ausnehmungen 22 sind in Umfangsrichtung gesehen alternierend radial verlaufende Messspeichen 24a und Nebenschlussspeichen 24b gebildet. Die Messspeichen 24a sind von gleichmäßiger Breite und tragen Messwertaufnehmer 26 (nur in den Figuren 1, 5 und 9 dargestellt), die zur Erzeugung elektrischer Ausgangssignale ausgebildet sind. Beispielsweise kann es sich bei diesen Messwertaufnehmern 26 um Dehnmessstreifen handeln, die in bekannter Art und Weise auf die Messspeichen 24a aufgeklebt sind. Die Breite der Nebenschlussspeichen 24b verringert sich von radial innen nach radial außen kontinuierlich.

Radial außen schließt sich an den mechanisch geschwächten Sensorabschnitt 20 ein hier kreisringförmiger, radial steifer Entkopplungsbereich 27 des Grundkörpers 12 an, der dazu dient, den mechanisch geschwächten Sensorabschnitt 20 gegenüber Kräften zu isolieren, die in einem nachstehend noch genauer beschriebenen radialelastischen Materialabschnitt 28 auftreten können, wenn radial gerichtete Kräfte auf den Grundkörper 12 wirken.

Der zuvor bereits erwähnte, hier ebenfalls kreisringförmige, radialelastische Materialabschnitt 28 befindet sich radial außerhalb des Entkopplungsbereichs 27 und sorgt durch seine radiale Nachgiebigkeit dafür, dass in den Grundkörper 12 eingeleitete, radial gerichtete Kräfte das Messergebnis nicht verfälschen. Ein Ausführungsbeispiel eines radialelastischen Materialabschnitts 28 wird im Folgenden genauer erläutert.

In dem in den Figuren 1 bis 4 gezeigten ersten Ausführungsbeispiel ist der radialelastische Materialabschnitt 28 mit einer Reihe sich in Umfangsrichtung erstreckender Schlitze 30a, 30b versehen, die den radialelastischen Materialabschnitt 28 und damit den Grundkörper 12 in axialer Richtung vollständig durchsetzen. Jeder der Schlitze 30a, 30b ist bei der ersten Ausführungsform kreisringsegmentförmig, wobei die Schlitze 30a, 30b in zwei Gruppen angeordnet sind, einer ersten, radial inneren Gruppe, die aus Schlitzen 30a besteht, und einer zweiten, radial äußeren Gruppe, die aus Schlitzen 30b besteht. Die Schlitze 30a der radial inneren Gruppe weisen jeweils eine Umfangserstreckung von etwa 55° auf, wohingegen die Erstreckung jedes Schlitzes 30b der radial äußeren Gruppe nur etwa 45° beträgt. Bei anderen Ausführungsformen kann die Umfangserstreckung der Schlitze 30a und 30b jeweils kleiner oder größer sein; auch kann die Umfangserstreckung der Schlitze 30a, 30b gleichgroß sein. Die Schlitze 30a der ersten, radial inneren Gruppe haben alle denselben Abstand vom Mittelpunkt M des Grundkörpers 12. Ebenso haben die Schlitze 30b der zweiten, radial äußeren Gruppe alle denselben Abstand vom Mittelpunkt M des Grundkörpers 12, jedoch ist dieser radiale Abstand r2 etwas größer als der radiale Abstand r1 der ersten Gruppe von Schlitzen 30a. Wie dargestellt überlappen sich die Schlitze 30a der ersten Gruppe in Umfangsrichtung gesehen mit den Schlitzen 30b der zweiten Gruppe und bilden dadurch pro Überlappungsbereich jeweils einen radialelastischen Biegebalken 31. Bei der in den Figuren 1 bis 4 gezeigten, ersten Ausführungsform des Drehmomentsensors 10 weist der radialelastische Materialabschnitt 28 demnach acht radialelastische Biegebalken 31 auf, die für die erwünschte radiale Elastizität des radialelastischen Materialabschnitts 28 sorgen.

Radial außerhalb des radialelastischen Materialabschnitts 28 befindet sich ein ringförmiger Außenflansch 32 mit mehreren jeweils als Bohrung ausgebildeten zweiten Krafteinleitungsstellen 34, die ebenso wie die ersten Krafteinleitungsstellen 16 den Grundkörper 12 in axialer Richtung vollständig durchsetzen. Bei den dargestellten Ausführungsbeispielen bildet der ringförmige Außenflansch 32 zugleich den Außenumfang des Grundkörpers 12. Dies muss jedoch nicht zwangsläufig so sein. Vielmehr können je nach Anwendungszweck und Einsatzgebiet des Drehmomentsensors 10 auch radial außerhalb des ringförmigen Außenflansches 32 noch Materialbereiche vorhanden sein (nicht gezeigt). Zur Vereinfachung einer korrekten Positionierung des Drehmomentsensors 10 ist im Außenflansch 32 an einer Stelle zwischen zwei zweiten Krafteinleitungsstellen 34 eine Positionierungsöffnung 35 ausgebildet.

Bei allen hier dargestellten Ausführungsformen ist der Grundköper 12 des Drehmomentsensors 10 einstückig, d. h. monolithisch, ausgeführt und weist über seine gesamte radiale Erstreckung eine einheitliche Dicke in axialer Richtung auf. Es ist jedoch auch möglich, den Grundkörper 12 mehrteilig auszubilden. Unabhängig davon, ob der Grundkörper 12 mehrteilig ausgebildet ist oder nicht, ist es ebenso möglich, dass die Dicke einzelner Abschnitte des Grundkörpers in axialer Richtung sich von der axialen Dicke anderer Abschnitte unterscheidet. So kann beispielsweise der Bereich, in dem sich der ringförmige Außenflansch 32 befindet, aus Stabilitätsgründen mit einer größeren axialen Dicke ausgeführt sein als der radialelastische Materialabschnitt 28 und/oder der Sensorabschnitt 20. Gleiches gilt auch für den Bereich des ringförmigen Innenflansches 18 und/oder den Entkopplungsbereich 27. Der Grundkörper 12 kann beispielsweise aus Aluminium oder einer Aluminiumlegierung bestehen, jedoch sind andere Materialien wie z.B. Stahl ebenfalls möglich.

Der radialelastische Materialabschnitt 28, der aufgrund des Vorhandenseins der radialelastischen Biegebalken 31 in radialer Richtung elastisch nachgiebig ist und damit als radialer Ausgleichsbereich wirken kann, hat zur Folge, dass ein auf den Drehmomentsensor 10 um die Achse A wirkendes Kippmoment die Messspeichen 24a nicht beeinflusst, auf denen sich die Messwertaufnehmer 26 befinden. Auch eine am Außenflansch 32 auftretende, beispielsweise elliptische oder wölbende Verformung führt nicht zu einer Beeinflussung der Messspeichen 24a und damit zu keiner Verfälschung der von den Messwertaufnehmern 26 erzeugten Ausgangssignale. Stattdessen wird eine solche elliptische oder wölbende Verformung von dem radialelastischen Materialabschnitt 28 quasi absorbiert und durch den Entkopplungsbereich 31 von den Messspeichen 24a ferngehalten. Die Biegebalken 31 sorgen durch ihre leichtere Verformbarkeit in radialer Richtung einerseits für die erwünschte radiale Elastizität, haben jedoch andererseits einen hohen Verformungswiderstand in Umfangsrichtung, so dass trotz des radialelastischen Materialabschnitts 28 der Drehmomentsensor 10 eine hohe Steifigkeit in Umfangsrichtung und damit hervorragende Voraussetzungen zur guten Einleitung und Übertragung eines zu messenden Drehmoments auf die Messspeichen 24a hat. Diese hohe Steifigkeit in Umfangsrichtung ermöglicht eine präzise Erfassung eines in den Drehmomentsensor 10 eingeleiteten Drehmoments.

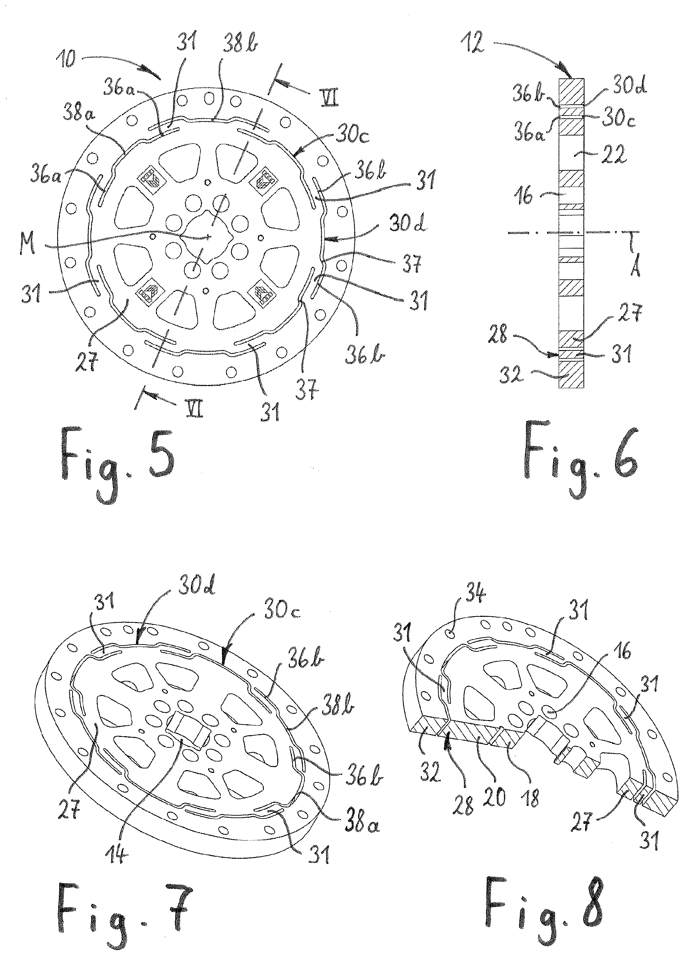

Die in den Figuren 5 bis 8 dargestellte, zweite Ausführungsform des Drehmomentsensors 10 unterscheidet sich von der in den Figuren 1 bis 4 gezeigten ersten Ausführungsform nur durch die Ausgestaltung des radialelastischen Materialabschnitts 28. Statt der kreisringsegmentförmigen Schlitze 30a und 30b der ersten Ausführungsform sind in der zweiten Ausführungsform Schlitze 30c und 30d vorhanden, die sich ebenfalls jeweils zumindest im Wesentlichen in Umfangsrichtung erstrecken, wobei jeder Schlitz 30c, 30d zumindest einen Umfangsendabschnitt 36a, 36b aufweist, dessen radialer Abstand vom Mittelpunkt M des Grundkörpers 12 sich von einem radialen Abstand unterscheidet, den ein anderer Umfangsabschnitt 38a, 38b desselben Schlitzes 30c, 30d vom Mittelpunkt M des Grundkörpers 12 hat. Wie aus Figur 5 gut zu erkennen, hat jeder Schlitz 30c zwei Umfangsendabschnitte 36a, die sich radial weiter innen befinden, und einen mittleren Umfangsabschnitt 38a, der mit den beiden Umfangsendabschnitten 36a durch einen hier treppenförmigen Übergangsbereich 37 verbunden ist und sich radial weiter außen befindet als die Umfangsendabschnitte 36a. In ähnlicher Weise weist jeder Schlitz 30d zwei Umfangsendabschnitte 36b und einen mittleren Umfangsabschnitt 38b auf, wobei hier jedoch die Umfangsendabschnitte 36b radial weiter außen angeordnet sind als der mittlere Umfangsabschnitt 38b. Wie ebenfalls gut aus Figur 5 zu ersehen ist, haben im dargestellten Ausführungsbeispiel die Umfangsendabschnitte 36b der Schlitze 30d einen radialen Abstand vom Mittelpunkt M des Grundkörpers 12, der dem radialen Abstand des mittleren Umfangsabschnitts 38a der Schlitze 30c entspricht. Hingegen hat der mittlere Umfangsabschnitt 38b jedes Schlitzes 30d einen radialen Abstand vom Mittelpunkt M des Grundkörpers 12, der zwischen dem radialen Abstand der Umfangsendabschnitte 36a und 36b liegt.

Aus Figur 5 ist ferner gut zu erkennen, dass sich die Schlitze 30c und 30d im Bereich ihrer Umfangsendabschnitte 36a und 36b jeweils in Umfangsrichtung überlappen und dadurch wiederum insgesamt acht radialelastische Biegebalken 31 bilden.

Die im Zusammenhang mit der ersten Ausführungsform erläuterten Vorteile des radialelastischen Materialabschnitts 28 gelten ebenso für die zweite Ausführungsform.

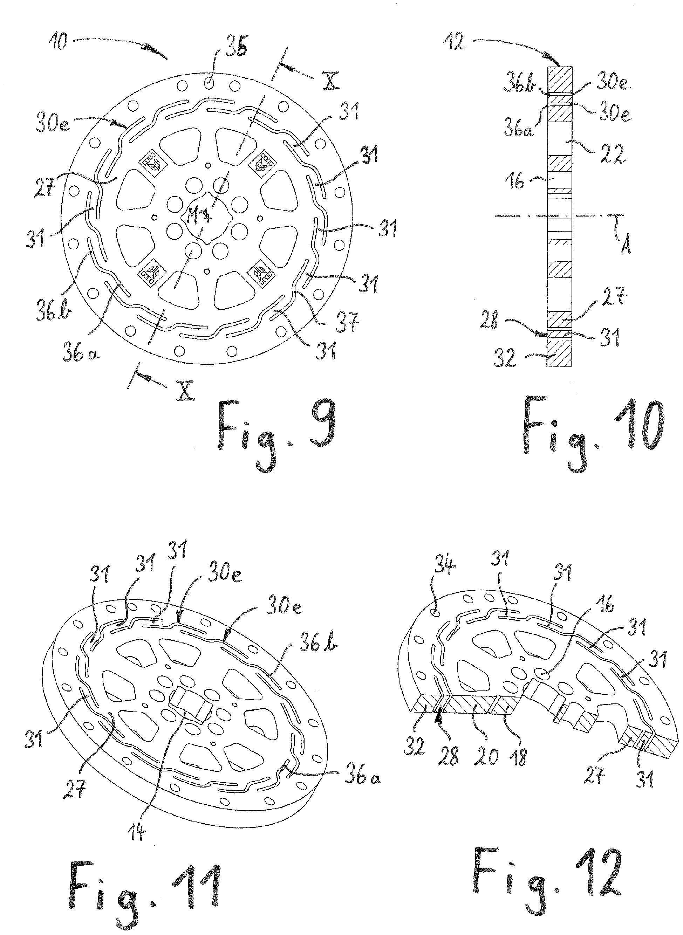

In den Figuren 9 bis 12 ist eine dritte Ausführungsform des Drehmomentsensors 10 gezeigt, die sich wiederum nur durch die Ausgestaltung des radialelastischen Materialabschnitts 28 von den zwei zuvor erläuterten Ausführungsformen unterscheidet. Im Gegensatz zu den ersten beiden Ausführungsformen gibt es bei der dritten Ausführungsform keine zwei Gruppen von Schlitzen 30a, 30b oder 30c, 30d, sondern lediglich eine Vielzahl einheitlich ausgeführter Schlitze 30e, die sich in Übereinstimmung mit den ersten beiden Ausführungsformen zumindest im Wesentlichen in Umfangsrichtung erstrecken. Jeder Schlitz 30e hat einen Umfangsendabschnitt 36a und einen Umfangsendabschnitt 36b, die durch einen treppenartigen Übergangsbereich 37 miteinander verbunden sind. Der Umfangsendabschnitt 36a ist radial weiter innen angeordnet als der Umfangsendabschnitt 36b. Im Bereich ihrer Umfangsendabschnitte 36a, 36b überlappen sich die Schlitze 30e jeweils in Umfangsrichtung und bilden dadurch insgesamt sechszehn radialelastische Biegebalken 31.

Die Vorteile der dritten Ausführungsform entsprechen denen der ersten beiden Ausführungsformen.

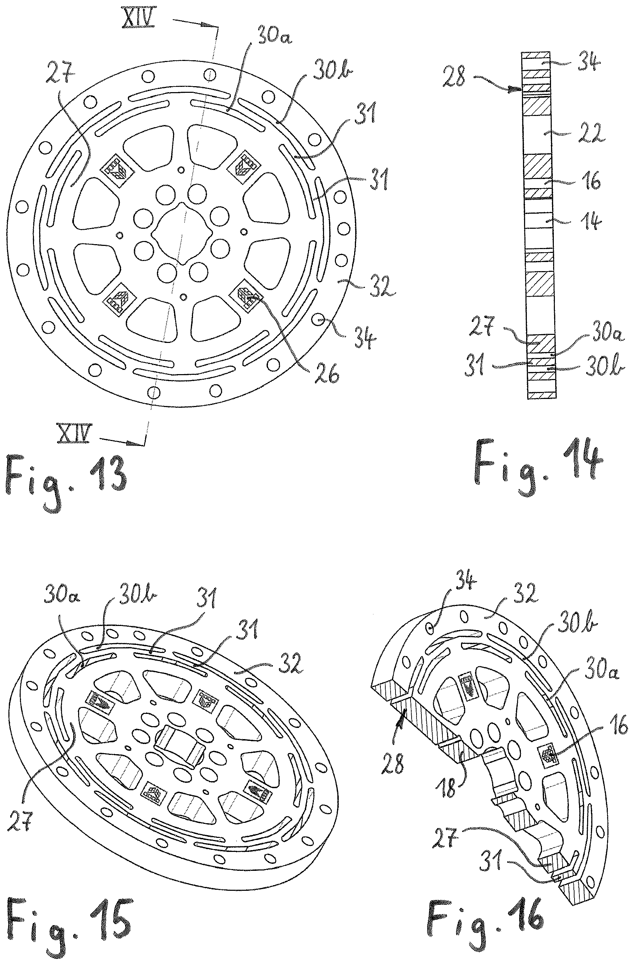

In den Figuren 13 bis 16 ist eine vierte Ausführungsform des Drehmomentsensors 10 gezeigt, die insgesamt der ersten Ausführungsform sehr ähnelt. Wie bei der ersten Ausführungsform weist der radialelastische Materialabschnitt 28 zwei Gruppen kreisringsegmentförmiger Schlitze auf, eine aus Schlitzen 30a bestehende, radial innere Gruppe und eine aus Schlitzen 30b bestehende, radial äußere Gruppe. Im Unterschied zur in den Figuren 1 bis 4 gezeigten ersten Ausführungsform ist bei der vierten Ausführungsform die Umfangserstreckung eines jeden der Schlitze 30a, 30b geringer und jede Gruppe umfasst mehr Schlitze als bei der ersten Ausführungsform. Während in der ersten Ausführungsform die radial innere Gruppe und die radial äu-ßere Gruppe jeweils vier Schlitze 30a bzw. 30b enthält, befinden sich in der vierten Ausführungsform acht Schlitze 30a in der radial inneren Gruppe und acht Schlitze 30b in der radial äußeren Gruppe. In den Überlappungsbereichen der Schlitze 30a und 30b des radialelastischen Materialabschnitts 28 sind demzufolge insgesamt sechszehn radialelastische Biegebalken 31 gebildet.

Der übrige Aufbau der vierten Ausführungsform stimmt mit der ersten Ausführungsform überein und die im Zusammenhang mit der ersten Ausführungsform erläuterten Vorteile gelten auch für die vierte Ausführungsform.

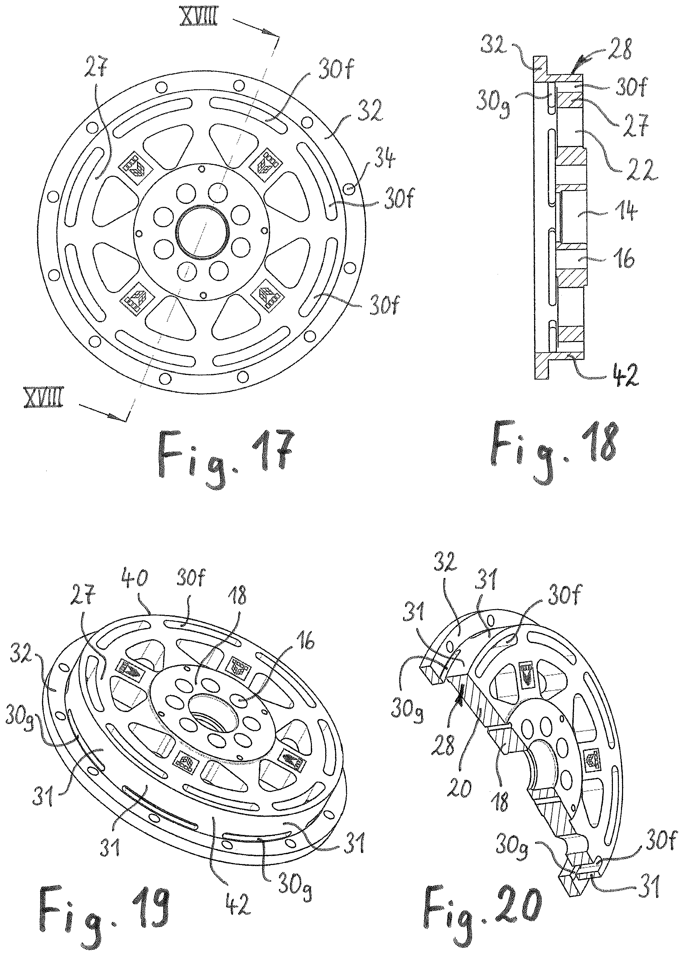

In den Figuren 17 bis 20 ist eine fünfte Ausführungsform des Drehmomentsensors 10 gezeigt, deren Aufbau sich etwas von den bisher beschriebenen Ausführungsformen unterscheidet. Im Gegensatz zu den bisher erläuterten Ausführungsformen befindet sich bei der fünften Ausführungsform der ringförmige Außenflansch 32 mit den zweiten Krafteinleitungsstellen 34 in einer Querschnittsebene, die axial etwas zu der Querschnittsebene versetzt ist, in der sich der radial steife Entkopplungsbereich 27, der mechanisch geschwächte Sensorabschnitt 20 und der ringförmige Innenflansch 18 mit den ersten Krafteinleitungsstellen 16 befinden. Der den ringförmigen Außenflansch 32 mit dem ringförmigen Entkopplungsbereich 27 verbindende radialelastische Materialabschnitt 28 beginnt in der Ebene des ringförmigen Entkopplungsbereichs 27 und weist dort eine erste Gruppe kreisringsegmentförmiger Schlitze 30f auf, die hier aus acht Schlitzen 30f besteht. Jeder Schlitz 30f durchsetzt wie auch bei den bisher beschriebenen Ausführungsformen den Grundkörper 12 in axialer Richtung vollständig.

An einem äußeren Umfangsrand 40 der ersten Querschnittsebene, in der sich der Entkopplungsbereich 27, der Sensorabschnitt 20 und der Innenflansch 18 befinden, knickt der radialelastische Materialabschnitt 28 aus der ersten Querschnittsebene L-förmig ab und stellt mit einer kreisringförmigen und sich axial erstreckenden Umfangswand 42 eine Verbindung zur zweiten Querschnittsebene her, in der der ringförmige Außenflansch 32 angeordnet ist. Der ringförmige Außenflansch 32 erstreckt sich von der kreisringförmigen Umfangswand 42 radial nach außen.

Zur Bildung radialelastischer Biegebalken 31 ist die kreisringförmige Umfangswand 42 mit einer zweiten Gruppe kreisringsegmentförmiger Schlitze 30g versehen, die hier aus ebenfalls acht Schlitzen 30g besteht. Jeder Schlitz 30g durchsetzt die Umfangswand 42 in radialer Richtung und ist so angeordnet, dass er mit jeweils zwei Schlitzen 30f der ersten Gruppe in Umfangsrichtung überlappt. Im dargestellten Ausführungsbeispiel befinden sich die Schlitze 30g in der Umfangswand 42 unmittelbar unterhalb des ringförmigen Außenflansches 32 und oberhalb des die erste Querschnittsebene definierenden Teils des Grundkörpers 12. Jedoch ist es ebenso denkbar, die Schlitze 30g axial näher an die Schlitze 30f heran zu rücken, was allerdings einen größeren Fertigungsaufwand nach sich zieht.

Durch die sich in Umfangsrichtung überlappenden Schlitze 30f und 30g werden im radialelastischen Materialabschnitt 28, genauer in der kreisringförmigen Umfangswand 42, radialelastische Biegebalken 31 gebildet, deren Anzahl von der Zahl der Schlitze und der Zahl der Überlappungsbereiche abhängt. Im hier gezeigten Ausführungsbeispiel weist der radialelastische Materialabschnitt 28 aufgrund der sich gegenseitig überlappenden, jeweils acht Schlitze 30f und 30g insgesamt sechzehn radialelastische Biegebalken 31 auf.

In funktionaler Hinsicht verhält sich die fünfte Ausführungsform genauso wie die zuvor beschriebenen ersten vier Ausführungsformen.

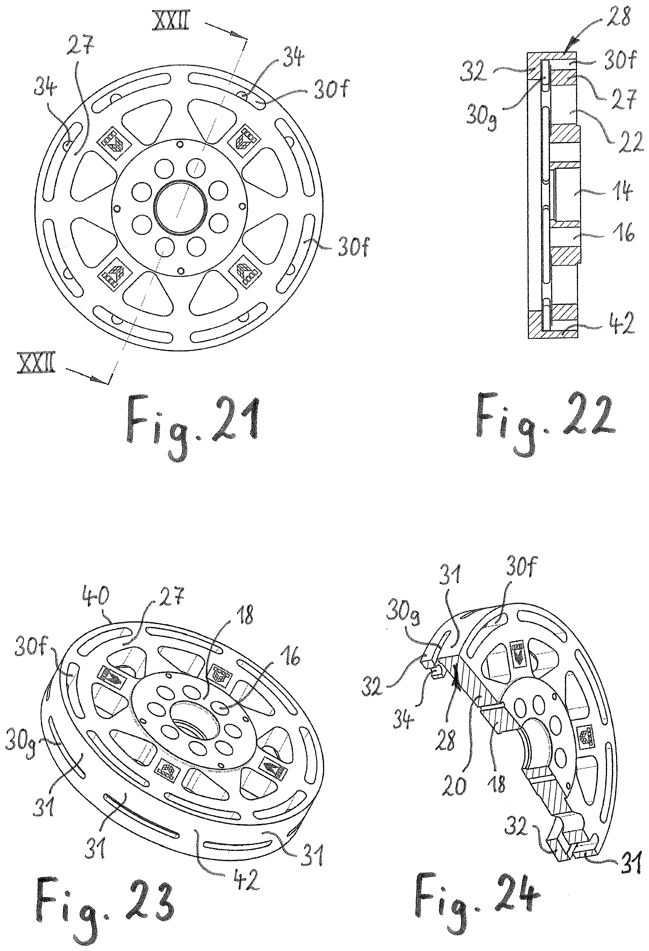

In den Figuren 21 bis 24 ist eine sechste Ausführungsform des Drehmomentsensors 10 gezeigt, deren Aufbau der zuvor erläuterten fünften Ausführungsform ähnelt. Im Unterschied zur fünften Ausführungsform erstreckt sich der ringförmige Außenflansch 32 jedoch von der kreisringförmigen Umfangswand 42 radial einwärts, wodurch sich auch die zweiten Krafteinleitungsstellen 34 bei ansonsten gleichen Abmessungen des Drehmomentsensors radial weiter innen befinden als bei der fünften Ausführungsform. Der Aufbau des radialelastischen Materialabschnitts 28 entspricht dem der fünften Ausführungsform.

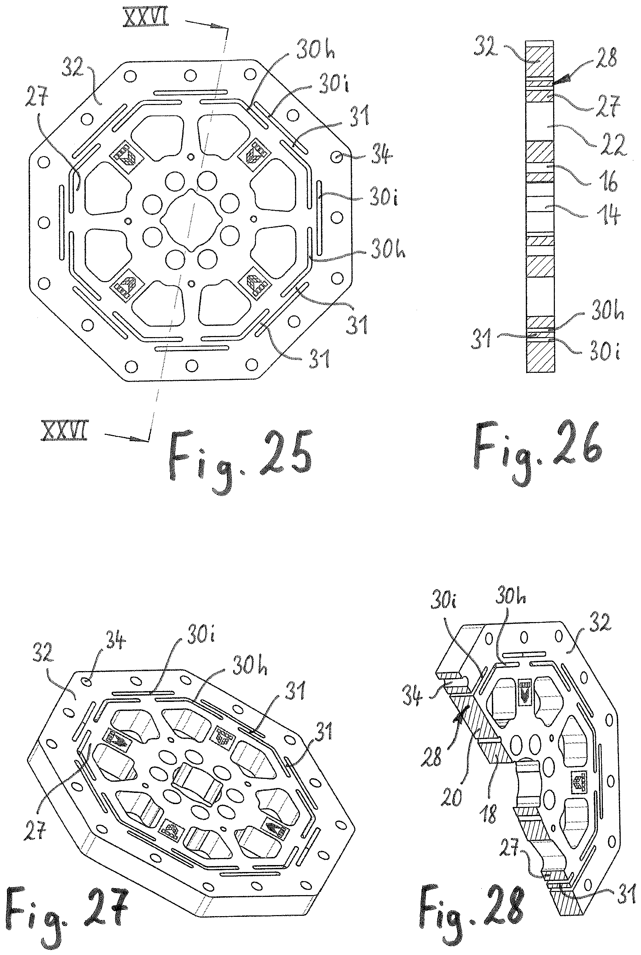

In den Figuren 25 bis 28 ist eine siebte Ausführungsform des Drehmomentsensors 10 gezeigt, deren Aufbau grundsätzlich der vierten Ausführungsform ähnelt. Der Grundkörper 12 der siebten Ausführungsform ist ebenso wie der der vierten Ausführungsform scheibenförmig und monolithisch, seine äußere Gestalt ist jedoch die eines Oktogons. Daraus folgt, dass auch der Außenflansch 32 zwar ringförmig ist, aber nicht kreisringförmig. Dies gilt auch für die Form des radialelastischen Materialabschnitts 28 und des radial steifen Entkopplungsbereichs 27.

Auch der radialelastische Materialabschnitt 28 unterscheidet sich in seinem Aufbau etwas von den bisher erläuterten Ausführungsformen. In Übereinstimmung mit beispielsweise der vierten Ausführungsform ist eine radial innere Gruppe von Schlitzen und eine radial äußere Gruppe von Schlitzen vorhanden, die bei der siebten Ausführungsform aus acht radial inneren Schlitzen 30h und acht radial äußeren Schlitzen 30i bestehen, jedoch ist keiner der Schlitze 30h, 30i kreisringsegmentförmig. Jeder der radial inneren Schlitze 30h besteht vielmehr aus zwei abknickend miteinander verbundenen, linearen Abschnitten, wobei sich der Abknickpunkt jeweils auf einer Radiuslinie befindet, die von einer Ecke des Oktogons zum Mittelpunkt des Grundkörpers 12 verläuft. Jeder der radial äußeren Schlitze 30i erstreckt sich vollständig linear und überquert keine der Radiuslinien, die von den Ecken des Oktogons zum Mittelpunkt des Grundkörpers 12 verlaufen. Wie dargestellt überlappen sich die Schlitze 30h und 30i in Umfangsrichtung gegenseitig, wodurch in den Überlappungsbereichen radialelastische Biegebalken 31 gebildet werden, hier insgesamt sechszehn Biegebalken 31.

Trotz der etwas anderen Form der Schlitze 30h, 30i entspricht die Funktion der durch sie gebildeten radialelastischen Biegebalken 31 im radialelastischen Materialabschnitt 28 der Funktion der radialelastischen Biegebalken 31 der zuvor beschriebenen Ausführungsformen. Es ergeben sich somit auch die gleichen Vorteile.

Es versteht sich, dass der erfindungsgemäße Drehmomentsensor 10 nicht auf die dargestellten und beschriebenen Ausführungsformen beschränkt ist. Vielmehr gibt es eine Vielzahl weiterer möglicher Schlitzausgestaltungen im radialelastischen Materialabschnitt 28, die ebenso zur erwünschten Elastizität in radialer Richtung bei gleichzeitig hoher Steifigkeit in Umfangsrichtung führen. So können beispielsweise bei der siebten Ausführungsform die abknickenden Schlitze radial außen und die linearen Schlitze innen angeordnet sein oder es können sowohl die radial inneren als auch die radial äußeren Schlitze jeweils eine abknickende Gestalt haben. Ferner kann der radialelastische Materialabschnitt 28 mit einer Reihe von Schlitzen versehen sein, die sich nach Art einer Turbinenschaufel im radialelastischen Materialabschnitt 28 erstrecken. Viele weitere Schlitzausgestaltungen und Kombinationsmöglichkeiten sind für einen Fachmann offensichtlich, ohne vom Grundgedanken der vorliegenden Erfindung abzuweichen.

## Patentansprüche

1. Drehmomentsensor (10) mit einem sich axial und in Umfangsrichtung erstreckenden Grundkörper (12), der sich in einer radialen Richtung des Grundkörpers von einem ringförmigen Innenflansch (18) mit ersten Krafteinleitungsstellen (16) über einen mechanisch geschwächten Sensorabschnitt (20), der mit Messwertaufnehmern zur Erzeugung von Ausgangssignalen versehen ist, zu einem ringförmigen Außenflansch (32) mit zweiten Krafteinleitungsstellen (34) erstreckt, wobei die zweiten Krafteinleitungsstellen (34) über einen radialelastischen Materialabschnitt (28) mit dem Sensorabschnitt (20) verbunden sind, wobei
- der radialelastische Materialabschnitt (28) durch mehrere radialelastische Biegebalken (31) gebildet ist, die über einen Umfang des Grundkörpers (12) verteilt angeordnet sind, **dadurch gekennzeichnet, dass**
- der radialelastische Materialabschnitt (28) über einen ringförmigen, radial steifen Entkopplungsbereich (27) mit dem mechanisch geschwächten Sensorabschnitt (20) verbunden ist.

2. Drehmomentsensor nach Anspruch 1,
**dadurch gekennzeichnet, dass** die Biegebalken (31) durch eine Reihe von Schlitzen (30a, 30b; 30c, 30d; 30e) gebildet sind, die den radialelastischen Materialabschnitt (28) in axialer oder radialer Richtung durchsetzen.

3. Drehmomentsensor nach Anspruch 2,
**dadurch gekennzeichnet, dass** die Schlitze (30a, 30b; 30c, 30d; 30e) sich zumindest im Wesentlichen in Umfangsrichtung erstrecken.

4. Drehmomentsensor nach einem der Ansprüche 1 bis 3,
**dadurch gekennzeichnet, dass** wenigstens drei Biegebalken (31) über den Umfang des Grundkörpers (12) verteilt angeordnet sind.

5. Drehmomentsensor nach Anspruch 3,
**dadurch gekennzeichnet, dass** die sich zumindest im Wesentlichen in Umfangsrichtung erstreckenden Schlitze (30a, 30b) jeweils kreisringsegmentförmig sind.

6. Drehmomentsensor nach Anspruch 5,
**dadurch gekennzeichnet, dass** die jeweils kreisringsegmentförmigen Schlitze (30a, 30b) in zumindest zwei Gruppen angeordnet sind, wobei jede Gruppe einen anderen radialen Abstand von einem Mittelpunkt (M) des Grundkörpers (12) hat.

7. Drehmomentsensor nach Anspruch 6,
**dadurch gekennzeichnet, dass** die kreisringsegmentförmigen Schlitze (30a) einer Gruppe zu den kreisringsegmentförmigen Schlitzen (30b) einer anderen Gruppe in Umfangsrichtung versetzt angeordnet sind.

8. Drehmomentsensor nach Anspruch 6,
**dadurch gekennzeichnet, dass** die kreisringsegmentförmigen Schlitze (30a, 30b) aller Gruppen in Umfangsrichtung versetzt zueinander angeordnet sind.

9. Drehmomentsensor nach Anspruch 3,
**dadurch gekennzeichnet, dass** die sich zumindest im Wesentlichen in Umfangsrichtung erstreckenden Schlitze (30c, 30d; 30e) Umfangsabschnitte (36a; 36b) aufweisen, deren radialer Abstand von einem Mittelpunkt (M) des Grundkörpers (12) sich von einem radialen Abstand unterscheidet, den andere Umfangsabschnitte (38a; 38b) der sich zumindest im Wesentlichen in Umfangsrichtung erstreckenden Schlitze (30c, 30d; 30e) vom Mittelpunkt (M) des Grundkörpers (12) haben.

10. Drehmomentsensor nach Anspruch 3,
**dadurch gekennzeichnet, dass** ein radialer Abstand, den die sich zumindest im Wesentlichen in Umfangsrichtung erstreckenden Schlitze von einem Mittelpunkt (M) des Grundkörpers (12) haben, sich über den Verlauf eines Schlitzes kontinuierlich ändert.

11. Drehmomentsensor nach einem der Ansprüche 2 bis 10,
**dadurch gekennzeichnet, dass** zumindest einige der Schlitze (30a, 30b; 30c, 30d; 30e) sich in Umfangsrichtung überlappen.

12. Drehmomentsensor nach einem der vorhergehenden Ansprüche,
**dadurch gekennzeichnet, dass** der Grundkörper (12) kreisscheibenförmig ist.

13. Drehmomentsensor nach einem der vorhergehenden Ansprüche,
**dadurch gekennzeichnet, dass** der Grundkörper (12) monolithisch ist.

14. Drehmomentsensor nach einem der vorhergehenden Ansprüche,
**dadurch gekennzeichnet, dass** die Messwertaufnehmer Dehnmessstreifen (26) sind.

15. Drehmomentsensor nach einem der vorhergehenden Ansprüche,
**dadurch gekennzeichnet, dass** die zweiten Krafteinleitungsstellen (34), der radialelastische Materialabschnitt (28), der ringförmige Entkopplungsbereich (27), der Sensorabschnitt (20) und die ersten Krafteinleitungsstellen (16) eine gemeinsame radiale Querschnittsebene aufweisen.

## Claims

1. Torque sensor (10) having a main body (12) extending axially and in a circumferential direction, which torque sensor extends in a radial direction of the main body from an annular inner flange (18) with first force introduction points (16) via a mechanically weakened sensor portion (20), which is provided with measuring transducers for generating output signals, to an annular outer flange (32) with second force introduction points (34), wherein the second force introduction points (34) are connected to the sensor portion (20) via a radially elastic material portion (28),
wherein
- the radially elastic material portion (28) is formed by a plurality of radially elastic bending strips (31) which are arranged distributed over a circumference of the main body (12), **characterized in that**
- the radially elastic material portion (28) is connected to the mechanically weakened sensor portion (20) via an annular, radially stiff decoupling region (27).

2. Torque sensor according to claim 1,
**characterized in that** the bending strips (31) are formed by a series of slots (30a, 30b; 30c, 30d; 30e) which pass through the radially elastic material portion (28) in the axial or radial direction.

3. Torque sensor according to claim 2,
**characterized in that** the slots (30a, 30b; 30c, 30d; 30e) extend at least substantially in the circumferential direction.

4. Torque sensor according to any one of claims 1 to 3,
**characterized in that** at least three bending strips (31) are arranged distributed over the circumference of the main body (12).

5. Torque sensor according to claim 3,
**characterized in that** the slots (30a, 30b) extending at least substantially in the circumferential direction are each circular-ring-segment-shaped.

6. Torque sensor according to claim 5,
**characterized in that** the circular-ring-segment-shaped slots (30a, 30b) are arranged in at least two groups, wherein each group having a different radial distance from a midpoint (M) of the main body (12).

7. Torque sensor according to claim 6,
**characterized in that** the circular-ring-segment-shaped slots (30a) of one group are arranged offset in the circumferential direction relative to the circular-ring-segment-shaped slots (30b) of another group.

8. Torque sensor according to claim 6,
**characterized in that** the circular-ring-segment-shaped slots (30a, 30b) of all the groups are arranged offset in the circumferential direction relative to one another.

9. Torque sensor according to claim 3,
**characterized in that** the slots (30c, 30d; 30e) extending at least substantially in the circumferential direction have circumferential portions (36a; 36b) whose radial distance from a midpoint (M) of the main body (12) is different from a radial distance from the midpoint (M) of the main body (12) other circumferential portions (38a; 38b) of the slots (30c, 30d; 30e) extending at least substantially in the circumferential direction.

10. Torque sensor according to claim 3,
**characterized in that** a radial distance from a midpoint (M) of the main body (12) of the slots extending at least substantially in the circumferential direction changes continuously over the profile of a slot.

11. Torque sensor according to one of claims 2 to 10,
**characterized in that** at least some of the slots (30a, 30b; 30c, 30d; 30e) overlap in the circumferential direction.

12. Torque sensor according to one of the preceding claims,
**characterized in that** the main body (12) is circular-disc-shaped.

13. Torque sensor according to one of the preceding claims,
**characterized in that** the main body (12) is monolithic.

14. Torque sensor according to one of the preceding claims,
**characterized in that** the measuring transducers are strain gauges (26).

15. Torque sensor according to one of the preceding claims,
**characterized in that** the second force introduction points (34), the radially elastic material portion (28), the annular decoupling region (27), the sensor portion (20) and the first force introduction points (16) have a common radial cross-sectional plane.

## Revendications

1. Capteur de couple (10) comprenant un corps de base (12) s'étendant axialement et dans la direction circonférentielle, qui s'étend dans une direction radiale du corps de base depuis une bride interne (18) annulaire avec des premiers points d'application de force (16) par une section de capteur (20) affaiblie mécaniquement, qui est dotée de récepteurs de valeurs de mesure pour générer des signaux de sortie, à une bride externe (32) annulaire avec des seconds points d'application de force (34), dans lequel les seconds points d'application de force (34) sont reliés par une section de matériau (28) radialement élastique à la section de capteur (20),
dans lequel
- la section de matériau (28) radialement élastique est formée par plusieurs barres de pliage (31) radialement élastiques qui sont réparties sur une périphérie du corps de base (12), **caractérisé en ce que**
- la section de matériau (28) radialement élastique est reliée par une zone de désaccouplement (27) annulaire, rigide radialement à la section de capteur (20) affaiblie mécaniquement.

2. Capteur de couple selon la revendication 1, **caractérisé en ce que** les barres de pliage (31) sont formées par une rangée de fentes (30a, 30b; 30c, 30d; 30e) qui traversent la section de matériau (28) radialement élastique dans la direction axiale ou radiale.

3. Capteur de couple selon la revendication 2, **caractérisé en ce que** les fentes (30a, 30b; 30c, 30d; 30e) s'étendent au moins sensiblement dans la direction circonférentielle.

4. Capteur de couple selon l'une quelconque des revendications 1 à 3, **caractérisé en ce qu'**au moins trois barres de pliage (31) sont réparties sur la circonférence du corps de base (12).

5. Capteur de couple selon la revendication 3, **caractérisé en ce que** les fentes (30a, 30b) s'étendant au moins sensiblement dans la direction circonférentielle sont respectivement en forme de segment circulaire.

6. Capteur de couple selon la revendication 5,
**caractérisé en ce que** les fentes (30a, 30b) respectivement en forme de segment circulaire sont disposées dans au moins deux groupes, la distance radiale par rapport au point médian (M) du corps de base (12) est différente pour chaque groupe.

7. Capteur de couple selon la revendication 6, **caractérisé en ce que** les fentes (30a) en forme de segment circulaire d'un groupe sont décalées dans la direction circonférentielle par rapport aux fentes (30b) en forme de segment circulaire d'un autre groupe.

8. Capteur de couple selon la revendication 6,
**caractérisé en ce que** les fentes (30a, 30b) en forme de segment circulaire de tous les groupes sont décalées les unes par rapport aux autres dans la direction circonférentielle.

9. Capteur de couple selon la revendication 3,
**caractérisé en ce que** les fentes (30c, 30d; 30e) s'étendant au moins sensiblement dans la direction circonférentielle présentent des sections circonférentielles (36a; 36b) dont la distance radiale par rapport à un point médian (M) du corps de base (12) se différencie d'une autre distance radiale, que d'autres sections circonférentielles (38a ; 38b) des fentes (30c, 30d ; 30e) s'étendant au moins sensiblement dans la direction circonférentielle ont par rapport au centre (M) du corps de base (12).

10. Capteur de couple selon la revendication 3,
**caractérisé en ce qu'**une distance radiale que les fentes s'étendant au moins sensiblement dans la direction circonférentielle ont à partir d'un point médian (M) du corps de base (12), varie en continu sur le tracé d'une fente.

11. Capteur de couple selon l'une quelconque des revendications 2 à 10, **caractérisé en ce qu'**au moins certaines des fentes (30a, 30b; 30c, 30d; 30e) se chevauchent dans la direction circonférentielle.

12. Capteur de couple selon l'une quelconque des revendications précédentes, **caractérisé en ce que** le corps de base (12) est en forme de disque circulaire.

13. Capteur de couple selon l'une quelconque des revendications précédentes, **caractérisé en ce que** le corps de base (12) est monolithique.

14. Capteur de couple selon l'une quelconque des revendications précédentes, **caractérisé en ce que** les capteurs de mesure sont des jauges de déformation (26).

15. Capteur de couple selon l'une quelconque des revendications précédentes, **caractérisé en ce que** les seconds points d'application de force (34), de la section de matériau élastiquement radiale (28), de la zone de désaccouplement (27) annulaire, de la section de capteur (20) et les premiers points d'application de force (16) présentent un plan de section transversale radiale commun.
